# EUROPEAN PATENT APPLICATION

(11) **EP 3 940 667 A2**
(43) Date of publication of application: **19.01.2022**
(21) Application number: 21190441.2
(22) Date of filing: 09.08.2021
(51) Int. Cl.: G08G 1/01, G08G 1/04, G08G 1/017, G06K 9/00, G06K 9/62

(54) **VEHICLE ASSOCIATION METHOD AND DEVICE, ROADSIDE EQUIPMENT AND CLOUD CONTROL PLATFORM**

(30) Priority: 21.12.2020 CN 202011520233
(71) Applicant: Apollo Intelligent Connectivity (Beijing) Technology Co., Ltd., Beijing 100176 (CN)
(72) Inventor: CAO, Huo, BEIJING, 100085 (CN)
(74) Representative: Regimbeau

(57) **Abstract**

Provided are a vehicle association method and a device, a roadside equipment and a cloud control platform. The vehicle association method is described below. An image of a current vehicle running on a road is collected according to a preset period by each observation point; an original observation sequence of the each observation point relative to the current vehicle is determined according to the image collected by the each observation point within a preset time period; a target observation sequence of the each observation point relative to the current vehicle is determined according to the original observation sequence of the each observation point relative to the current vehicle; and whether current vehicles observed by every two observation points are the same vehicle are detected.

## Description

### TECHNICAL FIELD

The present disclosure relates to the technical field of artificial intelligence, further, to intelligent transportation technology and, in particular, to a vehicle association method and device, a roadside equipment and a cloud control platform.

### BACKGROUND

Vehicle association is a core subject of today's intelligent transportation and related technologies. In the real environment, all the information of a vehicle to be observed cannot be accurately obtained only through a single observation point. Different observation points acquire different information in different directions and different angles. Therefore, it is extremely necessary to combine the data obtained by different observation points for the same vehicle to obtain high-precision information of the vehicle in various directions or various angles.

However, conventional association methods are mostly performed according to a single-frame image which has limitations. As a result, it is impossible to accurately associate images collected by different observation points, and the success rate of the association is relatively low.

### SUMMARY

The present disclosure provides a vehicle association method and a device, a roadside equipment and a cloud control platform, so that the misassociation caused by abnormal single-frame images may be effectively prevented, and thereby the success rate of the association can be improved.

According to a first aspect of the present disclosure, a vehicle association method is provided. The method includes the steps described below.

An image of a current vehicle running on a road is collected according to a preset period by each observation point.

An original observation sequence of the each observation point relative to the current vehicle is determined according to the image collected by the each observation point within a preset time period.

A target observation sequence of the each observation point relative to the current vehicle is determined according to the original observation sequence of the each observation point relative to the current vehicle.

Whether current vehicles observed by every two observation points are a same vehicle is detected according to the target observation sequence of the each observation point relative to the current vehicle.

According to a second aspect, a vehicle association device is provided. The device includes a collection module, a determination module and a detection module.

The collection module is configured to collect, by each observation point, an image of a current vehicle running on a road according to a preset period.

The determination module is configured to determine, according to the image collected by the each observation point within a preset time period, an original observation sequence of the each observation point relative to the current vehicle; and determine, according to the original observation sequence of the each observation point relative to the current vehicle, a target observation sequence of the each observation point relative to the current vehicle.

The detection module is configured to detect, according to the target observation sequence of the each observation point relative to the current vehicle, whether current vehicles observed by every two observation points are a same vehicle.

According to a third aspect of the present disclosure, an electronic equipment is provided. The electronic equipment includes one or more processors and a memory.

The memory is configured to store one or more programs, and the one or more programs are executed by the one or more processors to cause the one or more processors to implement the vehicle association method of any embodiment of the present disclosure.

According to a fourth aspect, a storage medium is provided. The storage medium stores a computer program. The program, when executed by a processor, implements the vehicle association method of any embodiment of the present disclosure.

According to a fifth aspect, a computer program product is provided. The computer program product, when executed by a computer equipment, implements the vehicle association method of any embodiment of the present disclosure.

According to a sixth aspect of the present disclosure, a roadside equipment is provided. The roadside equipment includes the electronic equipment of the embodiment of the present disclosure.

According to a seventh aspect of the present disclosure, a cloud control platform is provided. The cloud control platform includes the electronic equipment of the embodiment of the present disclosure.

According to the techniques of the present disclosure, the problem in the related art is solved that the association preformed according to a single-frame image which has limitations leads to the impossibility of accurately associating images collected by different observation points and the relatively low success rate of the association. According to the technical solution provided by the present disclosure, the misassociation caused by abnormal single-frame images may be effectively prevented, and thereby the success rate of the association can be improved.

It is to be understood that the content described in this part is neither intended to identify key or important features of embodiments of the present disclosure nor intended to limit the scope of the present disclosure. Other features of the present disclosure are apparent from the description provided hereinafter.

### BRIEF DESCRIPTION OF DRAWINGS

The drawings are intended to provide a better understanding of the present solution and not to limit the present disclosure.
FIG. 1 is a first flowchart of a vehicle association method according to an embodiment of the present disclosure;
FIG. 2 is a second flowchart of a vehicle association method according to an embodiment of the present disclosure;
FIG. 3 is a third flowchart of a vehicle association method according to an embodiment of the present disclosure;
FIG. 4 is a scene view of a vehicle running on a road according to the present disclosure;
FIG. 5 is a structural diagram of a vehicle association device according to an embodiment of the present disclosure;
FIG. 6 is a structural diagram of a detection module according to an embodiment of the present disclosure; and
FIG. 7 is a block diagram of an electronic equipment for implementing a vehicle association method according to an embodiment of the present disclosure.

### DETAILED DESCRIPTION

Example embodiments of the present disclosure, including details of embodiments of the present disclosure, are described hereinafter in conjunction with the drawings to facilitate understanding. The example embodiments are illustrative only. Therefore, it is to be understood by those of ordinary skill in the art that various changes and modifications may be made to the embodiments described herein without departing from the scope and spirit of the present disclosure. Similarly, description of well-known functions and constructions is omitted hereinafter for clarity and conciseness.

### Embodiment one

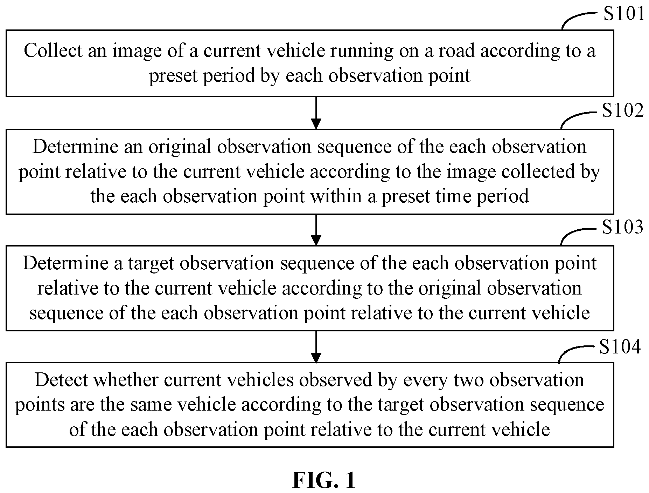

FIG. 1 is a first flowchart of a vehicle association method according to an embodiment of the present disclosure. The method may be executed by a vehicle association device or an electronic equipment or a roadside equipment. The device or the electronic equipment or the roadside equipment may be implemented as software and/or hardware. The device or the electronic equipment or the roadside equipment may be integrated in any intelligent equipment having the network communication function. As shown in FIG. 1, the vehicle association method may include the steps described below.

In step S101, an image of a current vehicle running on a road is collected according to a preset period by each observation point.

In the step, an electronic equipment may collect an image of a current vehicle running on a road according to a preset period by each observation point. The observation point in the present disclosure may be various types of image collection equipments, such as a camera or a video camera. Specifically, during running of the vehicle, the electronic equipment may collect the image of the vehicle according to a preset period, for example, the collection frequency may be 60 Hertz (Hz).

In step S102, an original observation sequence of the each observation point relative to the current vehicle is determined according to the image collected by the each observation point within a preset time period.

In the step, the electronic equipment may determine an original observation sequence of the each observation point relative to the current vehicle according to the image collected by the each observation point within a preset time period. Specifically, the electronic equipment may determine, according to the image collected by the each observation point within the preset time period, a position where the current vehicle is located when each image is collected by the each observation point; determine, according to the position where the current vehicle is located when the each image is collected by the each observation point and a time point at which the each image is collected by the each observation point, observation data of the each observation point at each time point, where the observation data includes: the time point and the position; and obtain, according to the observation data of the each observation point at the each time point, the original observation sequence of the each observation point relative to the current vehicle.

In step S103, a target observation sequence of the each observation point relative to the current vehicle is determined according to the original observation sequence of the each observation point relative to the current vehicle.

In the step, the electronic equipment may determine a target observation sequence of the each observation point relative to the current vehicle according to the original observation sequence of the each observation point relative to the current vehicle. Specifically, the electronic equipment may detect, according to each piece of observation data in the original observation sequence of the each observation point relative to the current vehicle, whether the original observation sequence of the each observation point relative to the current vehicle satisfies an interception condition. In response to the original observation sequence of the each observation point relative to the current vehicle satisfying the interception condition, the electronic equipment may intercept, according to a time point in each piece of observation data in each of the original observation sequence, the original observation sequence of the each observation point relative to the current vehicle, and obtain the target observation sequence of the each observation point relative to the current vehicle.

In step S104, whether current vehicles observed by every two observation points are the same vehicle is detected according to the target observation sequence of the each observation point relative to the current vehicle.

In the step, the electronic equipment may detect whether current vehicles observed by every two observation points are the same vehicle according to the target observation sequence of the each observation point relative to the current vehicle. Specifically, the electronic equipment may calculate, according to the target observation sequence of the each observation point relative to the current vehicle, an average length of running tracks of current vehicles observed by the every two observation points and an area between the running tracks of the current vehicles observed by the every two observation points; calculate, according to the area between the running tracks of the current vehicles observed by the every two observation points and the average length of the running tracks of the current vehicles observed by the every two observation points, a similarity between the current vehicles observed by the every two observation points; and detect, according to the similarity between the current vehicles observed by the every two observation points, whether the current vehicles observed by the every two observation points are the same vehicle.

According to the vehicle association method provided by the embodiment of the present disclosure, an image of a current vehicle running on a road is firstly collected according to a preset period by each observation point; an original observation sequence of the each observation point relative to the current vehicle is determined according to the image collected by the each observation point within a preset time period; then a target observation sequence of the each observation point relative to the current vehicle is determined according to the original observation sequence of the each observation point relative to the current vehicle; and whether current vehicles observed by every two observation points are the same vehicle are detected according to the target observation sequence of the each observation point relative to the current vehicle. That is, according to the present disclosure, the vehicle association may be performed according to the original observation sequence of the each observation point relative to the current vehicle. In the related art, conventional association methods are mostly performed according to a single-frame image. The present disclosure adopts the technical means of performing the vehicle association according to an original observation sequence of each observation point relative to a current vehicle, so that the problem in the related art is solved that the association preformed according to a single-frame image which has limitations leads to the impossibility of accurately associating images collected by different observation points and the relatively low success rate of the association. According to the technical solution provided by the present disclosure, the misassociation caused by abnormal single-frame images can be effectively prevented, and thereby the success rate of the association can be improved. Moreover, the technical solution provided in the embodiments of the present disclosure is simple and convenient to implement, easy to popularize and has a wider application range.

### Embodiment two

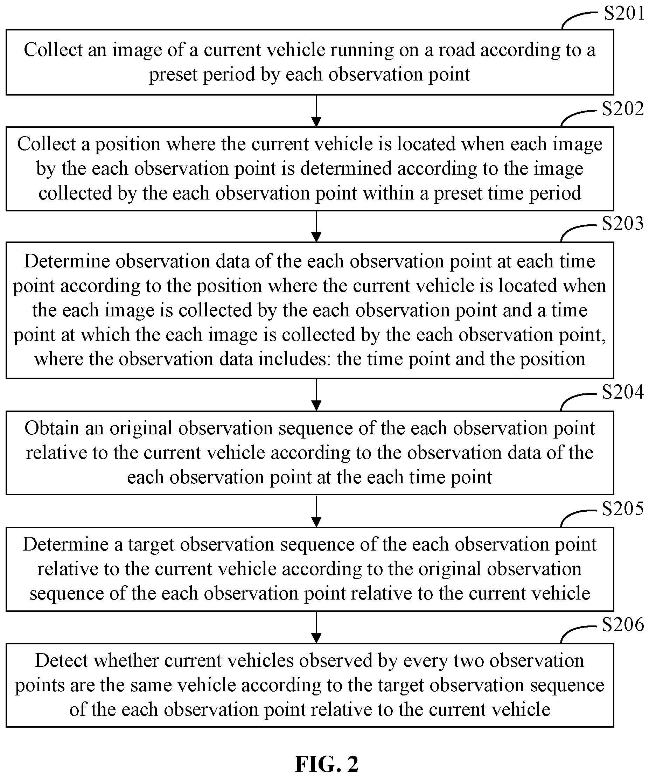

FIG. 2 is a second flowchart of a vehicle association method according to an embodiment of the present disclosure. As shown in FIG. 2, the vehicle association method may include the steps described below.

In step S201, an image of a current vehicle running on a road is collected according to a preset period by each observation point.

In step S202, a position where the current vehicle is located when each image is collected by the each observation point is determined according to the image collected by the each observation point within a preset time period.

In the step, an electronic equipment may determine a position where the current vehicle is located when each image is collected by the each observation point according to the image collected by the each observation point within a preset time period. Specifically, the electronic equipment may identify the image collected by the each observation point within the preset time period. For example, the electronic equipment may input the image collected by the each observation point within the preset time period into a pre-trained image identification model, and determine, through the image recognition model, the position where the current vehicle is located when the each image is collected by the each observation point.

In step S203, observation data of the each observation point at each time point is determined according to the position where the current vehicle is located when the each image is collected by the each observation point and a time point at which the each image is collected by the each observation point. The observation data includes: the time point and the position.

In the step, the electronic equipment may determine observation data of the each observation point at each time point according to the position where the current vehicle is located when the each image is collected by the each observation point and a time point at which the each image is collected by the each observation point. The observation data includes: the time point and the position. Specifically, it is assumed that the positions where the current vehicle is located are A1, A2, A3, ..., An when each image is collected by an observation point A, and n is a natural number greater than or equal to 1; A1 represents the observation data of the observation point A at a first time point, A2 represents the observation data of the observation point A at a second time point, and so on.

In step S204, an original observation sequence of the each observation point relative to the current vehicle is obtained according to the observation data of the each observation point at the each time point.

In step S205, a target observation sequence of the each observation point relative to the current vehicle is determined according to the original observation sequence of the each observation point relative to the current vehicle.

In step S206, whether current vehicles observed by every two observation points are the same vehicle is detected according to the target observation sequence of the each observation point relative to the current vehicle.

According to the vehicle association method provided by the embodiment of the present disclosure, an image of a current vehicle running on a road is firstly collected according to a preset period by each observation point; an original observation sequence of the each observation point relative to the current vehicle is determined according to the image collected by the each observation point within a preset time period; then a target observation sequence of the each observation point relative to the current vehicle is determined according to the original observation sequence of the each observation point relative to the current vehicle; and whether current vehicles observed by every two observation points are the same vehicle are detected according to the target observation sequence of the each observation point relative to the current vehicle. That is, according to the present disclosure, the vehicle association may be performed according to the original observation sequence of the each observation point relative to the current vehicle. In the related vehicle association methods, conventional association methods are mostly performed according to a single-frame image. The present disclosure adopts the technical means of performing the vehicle association according to an original observation sequence of each observation point relative to a current vehicle, so that the problem in the related art is solved that the association preformed according to a single-frame image which has limitations leads to the impossibility of accurately associating images collected by different observation points and the relatively low success rate of the association. According to the technical solution provided by the present disclosure, the misassociation caused by abnormal single-frame images can be effectively prevented, and thereby the success rate of the association can be improved. Moreover, the technical solution of the embodiment of the present disclosure is simple and convenient to implement, easy to popularize and has a wider application range.

### Embodiment three

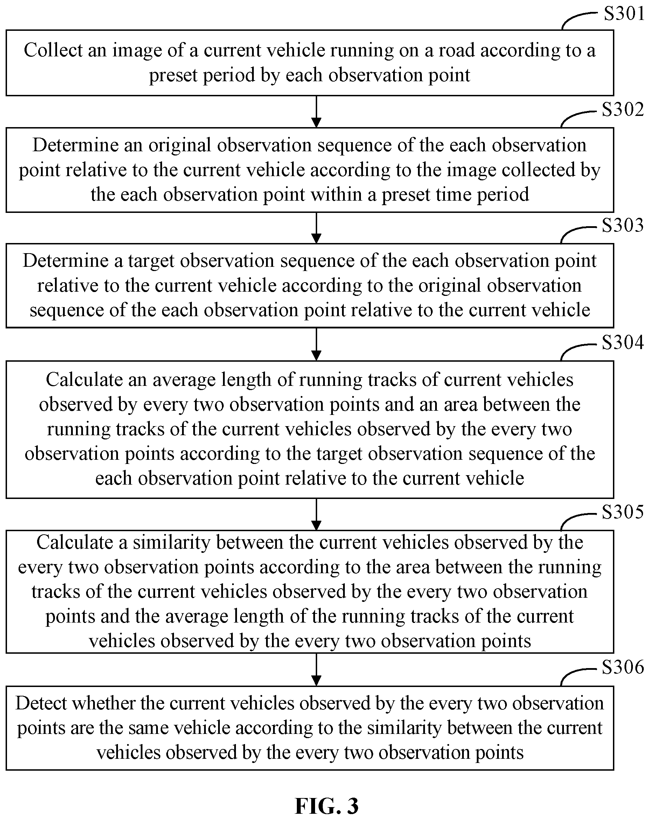

FIG. 3 is a third flowchart of a vehicle association method according to an embodiment of the present disclosure. As shown in FIG. 3, the vehicle association method may include the steps described below.

In step S301, an image of a current vehicle running on a road is collected according to a preset period by each observation point.

In step S302, an original observation sequence of the each observation point relative to the current vehicle is determined according to the image collected by the each observation point within a preset time period.

In step S303, a target observation sequence of the each observation point relative to the current vehicle is determined according to the original observation sequence of the each observation point relative to the current vehicle.

In the step, an electronic equipment may determine a target observation sequence of the each observation point relative to the current vehicle according to the original observation sequence of the each observation point relative to the current vehicle. Specifically, the electronic equipment may detect, according to each piece of observation data in the original observation sequence of the each observation point relative to the current vehicle, whether the original observation sequence of the each observation point relative to the current vehicle satisfies an interception condition; and in response to the original observation sequence of the each observation point relative to the current vehicle satisfying the interception condition, the electronic equipment may intercept, according to a time point in each piece of observation data in each of the original observation sequence, the original observation sequence of the each observation point relative to the current vehicle, and obtain the target observation sequence of the each observation point relative to the current vehicle. For example, it is assumed that original observation sequences collected by an observation point A respectively are: A1, A2, A3, A4, A5, A6, A7, A8, A9 and A10; and original observation sequences collected by an observation point B are: B7, B8, B9 and BIO. Therefore, in the step, the original observation sequences collected by the observation point A may be intercepted to obtain A7, A8, A9 and A10, which can be aligned with the original observation sequences collected by the observation point B.

In step S304, an average length of running tracks of current vehicles observed by every two observation points and an area between the running tracks of the current vehicles observed by the every two observation points are calculated according to the target observation sequence of the each observation point relative to the current vehicle.

In the step, the electronic equipment may calculate an average length of running tracks of current vehicles observed by every two observation points and an area between the running tracks of the current vehicles observed by the every two observation points according to the target observation sequence of the each observation point relative to the current vehicle. Specifically, the electronic equipment may, when calculating the average length of the running tracks of the current vehicles observed by the every two observation points, firstly extract a position in each piece of observation data from the target observation sequence of the each observation point relative to the current vehicle; then calculate, according to the position in the each piece of observation data extracted from the target observation sequence of the each observation point relative to the current vehicle, a length of a running track of the current vehicle observed by the each observation point; and calculate, according to the length of the running track of the current vehicle observed by the each observation point, the average length of the running tracks of the current vehicles observed by the every two observation points. For example, it is assumed that the position where the current vehicle is located when each image is collected by an observation point A are A1, A2, A3,..., An, and n is a natural number greater than or equal to 1; it is assumed that the position where the current vehicle is located when each image is collected by an observation point B are B1, B2, B3,..., Bm, and m is a natural number greater than or equal to 1; then, the length of the running track of the current vehicle observed by the observation point A may be expressed as: dist(A1, A2, A3, ..., An), and the length of the running track of the current vehicle observed by the observation point B may be expressed as: dist(B1, B2, B3,..., Bm); and the average length of the running tracks of the current vehicles observed by the observation point A and the observation point B may be expressed as: Length=[dist(A1, A2, A3,..., An)+dist(B1, B2, B3,..., Bm)]/2.

In step S305, a similarity between the current vehicles observed by the every two observation points is calculated according to the area between the running tracks of the current vehicles observed by the every two observation points and the average length of the running tracks of the current vehicles observed by the every two observation points.

In the step, the electronic equipment may calculate a similarity between the current vehicles observed by the every two observation points according to the area between the running tracks of the current vehicles observed by the every two observation points and the average length of the running tracks of the current vehicles observed by the every two observation points. Specifically, it is assumed that the area between the running tracks of the current vehicles observed by the every two observation points is *SA* and the average length of the running tracks of the current vehicles observed by the every two observation points is Length, then the electronic equipment may calculate the similarity between the current vehicles observed by the every two observation points by adopting the following formula: Similarity = 1- *SA*/(Length × Length).

In step S306, whether the current vehicles observed by the every two observation points are the same vehicle is detected according to the similarity between the current vehicles observed by the every two observation points.

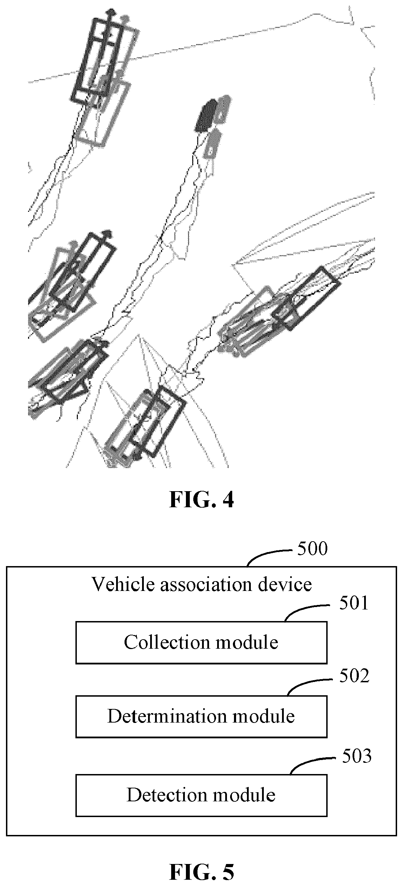

FIG. 4 is a scene view of a vehicle running on a road according to the present disclosure. As shown in FIG. 4, the same vehicle deviates greatly in some single frame situations, and the similarity of tracks is relatively high. Therefore, by utilizing the track similarity method based on area division, noise may be removed, and the miassociation of objects in movement caused by inaccurate single frame information can be avoided.

According to the vehicle association method provided by the embodiment of the present disclosure, an image of a current vehicle running on a road is firstly collected according to a preset period by each observation point; an original observation sequence of the each observation point relative to the current vehicle is determined according to the image collected by the each observation point within a preset time period; then a target observation sequence of the each observation point relative to the current vehicle is determined according to the original observation sequence of the each observation point relative to the current vehicle; and whether current vehicles observed by every two observation points are the same vehicle are detected according to the target observation sequence of the each observation point relative to the current vehicle. That is, according to the present disclosure, the vehicle association may be performed according to the original observation sequence of the each observation point relative to the current vehicle. In the related vehicle association methods, conventional association methods are mostly performed according to a single-frame image. The present disclosure adopts the technical means of performing the vehicle association according to an original observation sequence of each observation point relative to a current vehicle, so that the problem in the related art is solved that the association preformed according to a single-frame image which has limitations leads to the impossibility of accurately associating images collected by different observation points and the relatively low success rate of the association. According to the technical solution provided by the present disclosure, the misassociation caused by abnormal single-frame images can be effectively prevented, and thereby the success rate of the association can be improved. Moreover, the technical solution of the embodiment of the present disclosure is simple and convenient to implement, easy to popularize and has a wider application range.

### Embodiment four

FIG. 5 is a structural diagram of a vehicle association device according to an embodiment of the present disclosure. As shown in FIG. 5, the device 500 includes: a collection module 501, a determination module 502 and a detection module 503.

The collection module 501 is configured to collect, by each observation point, an image of a current vehicle running on a road according to a preset period.

The determination module 502 is configured to determine, according to the image collected by the each observation point within a preset time period, an original observation sequence of the each observation point relative to the current vehicle; and determine, according to the original observation sequence of the each observation point relative to the current vehicle, a target observation sequence of the each observation point relative to the current vehicle.

The detection module 503 is configured to detect, according to the target observation sequence of the each observation point relative to the current vehicle, whether current vehicles observed by every two observation points are the same vehicle.

Further, the determination module 502 is specifically configured to determine, according to the image collected by the each observation point within the preset time period, a position where the current vehicle is located when each image is collected by the each observation point; determine, according to the position where the current vehicle is located when the each image is collected by the each observation point and a time point at which the each image is collected by the each observation point, observation data of the each observation point at each time point, where the observation data includes: the time point and the position; and obtain, according to the observation data of the each observation point at the each time point, the original observation sequence of the each observation point relative to the current vehicle.

Further, the determination module 502 is specifically configured to detect, according to each piece of observation data in the original observation sequence of the each observation point relative to the current vehicle, whether the original observation sequence of the each observation point relative to the current vehicle satisfies an interception condition; and in response to the original observation sequence of the each observation point relative to the current vehicle satisfying the interception condition, intercept, according to a time point in each piece of observation data in each of the original observation sequence, the original observation sequence of the each observation point relative to the current vehicle, and obtain the target observation sequence of the each observation point relative to the current vehicle.

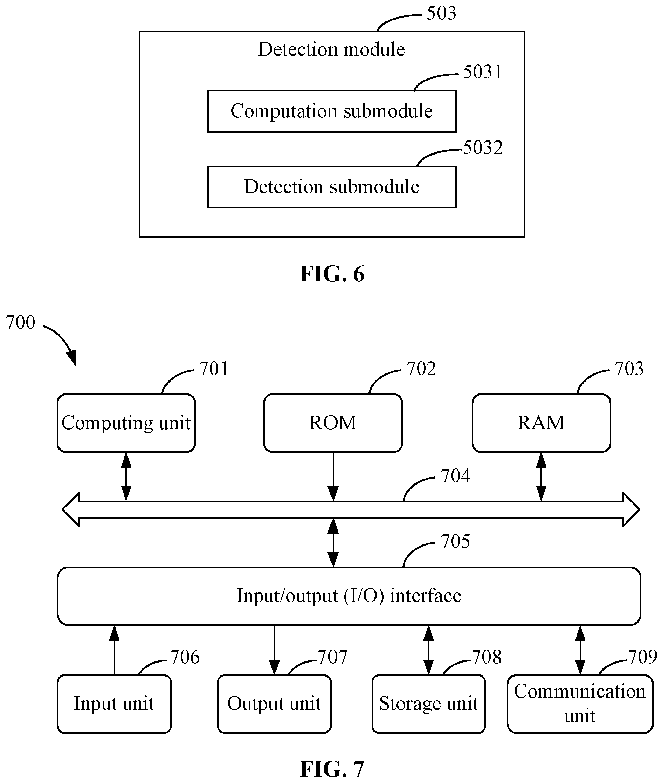

FIG. 6 is a structural diagram of a detection module according to an embodiment of the present disclosure. As shown in FIG. 6, the detection module 503 includes: a computation submodule 5031 and a detection submodule 5032.

The computation submodule 5031 is configured to calculate, according to the target observation sequence of the each observation point relative to the current vehicle, an average length of running tracks of current vehicles observed by the every two observation points and an area between the running tracks of the current vehicles observed by the every two observation points; and calculate, according to the area between the running tracks of the current vehicles observed by the every two observation points and the average length of the running tracks of the current vehicles observed by the every two observation points, a similarity between the current vehicles observed by the every two observation points

The detection submodule 5032 is configured to detect, according to the similarity between the current vehicles observed by the every two observation points, whether the current vehicles observed by the every two observation points are the same vehicle.

Further, the computation submodule 5031 is configured to extract a position in each piece of observation data from the target observation sequence of the each observation point relative to the current vehicle; calculate, according to the position in the each piece of observation data extracted from the target observation sequence of the each observation point relative to the current vehicle, a length of a running track of the current vehicle observed by the each observation point; and calculate, according to the length of the running track of the current vehicle observed by the each observation point, the average length of the running tracks of the current vehicles observed by the every two observation points.

The above vehicle association device can execute the method provided by any embodiment of the present disclosure, and has functional modules and beneficial effects corresponding to the executed method. For technical details not described in detail in the embodiment, reference may be made to the vehicle association method provided by any embodiment of the present disclosure.

### Embodiment five

According to an embodiment of the present disclosure, the present disclosure further provides an electronic equipment, a readable storage medium and a computer program product.

FIG. 7 shows a schematic block diagram of an example electronic equipment 700 for implementing the embodiments of the present disclosure. Electronic equipments are intended to represent various forms of digital computers, for example, laptop computers, desktop computers, worktables, personal digital assistants, servers, blade servers, mainframe computers and other applicable computers. Electronic equipments may also represent various forms of mobile devices, for example, personal digital assistants, cellphones, smartphones, wearable devices and other similar computing devices. Herein the shown components, the connections and relationships between these components, and the functions of these components are illustrative only and are not intended to limit the implementation of the present disclosure as described and/or claimed herein.

As shown in FIG. 7, the equipment 700 includes a computing unit 701. The computing unit 701 may perform various appropriate actions and processing according to a computer program stored in a read-only memory (ROM) 702 or a computer program loaded into a random-access memory (RAM) 703 from a storage unit 708. The RAM 703 may also store various programs and data required for operations of the equipment 700. The computing unit 701, the ROM 702 and the RAM 703 are connected to each other by a bus 704. An input/output (I/O) interface 705 is also connected to the bus 704.

Multiple components in the equipment 700 are connected to the I/O interface 705. The multiple components include an input unit 706 such as a keyboard or a mouse; an output unit 707 such as various types of displays or speakers; a storage unit 708 such as a magnetic disk or an optical disk; and a communication unit 709 such as a network card, a modem or a wireless communication transceiver. The communication unit 709 allows the equipment 700 to exchange information/data with other equipments over a computer network such as the Internet and/or over various telecommunication networks.

The computing unit 701 may be a general-purpose and/or special-purpose processing component having processing and computing capabilities. Examples of the computing unit 701 include, but are not limited to, a central processing unit (CPU), a graphics processing unit (GPU), a special-purpose artificial intelligence (AI) computing chip, a computing unit executing machine learning model algorithms, a digital signal processor (DSP), and any appropriate processor, controller and microcontroller. The computing unit 701 executes various methods and processing described above, such as the vehicle association method. For example, in some embodiments, the vehicle association method may be implemented as a computer software program tangibly contained in a machine-readable medium such as the storage unit 708. In some embodiments, part or all of computer programs may be loaded and/or installed on the equipment 700 via the ROM 702 and/or the communication unit 709. When the computer program is loaded to the RAM 703 and executed by the computing unit 701, one or more steps of the preceding vehicle association method may be executed. Alternatively, in other embodiments, the computing unit 701 may be configured, in any other suitable manner (for example, by means of firmware), to perform the vehicle association method.

The preceding various embodiments of systems and techniques may be implemented in digital electronic circuitry, integrated circuitry, a field-programmable gate array (FPGA), an disclosure-specific integrated circuit (ASIC), an disclosure-specific standard product (ASSP), a system on a chip (SoC), a complex programmable logic device (CPLD), computer hardware, firmware, software and/or any combination thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input device and at least one output device and transmitting the data and instructions to the memory system, the at least one input device and the at least one output device.

Program codes for implementation of the method of the present disclosure may be written in any combination of one or more programming languages. These program codes may be provided for the processor or controller of a general-purpose computer, a special-purpose computer or another programmable data processing device to enable functions/operations specified in a flowchart and/or a block diagram to be implemented when the program codes are executed by the processor or controller. The program codes may all be executed on a machine; may be partially executed on a machine; may serve as a separate software package that is partially executed on a machine and partially executed on a remote machine; or may all be executed on a remote machine or a server.

In the context of the present disclosure, the machine-readable medium may be a tangible medium that contains or stores a program available for an instruction execution system, device or equipment or a program used in conjunction with an instruction execution system, device or equipment. The machine-readable medium may be a machine-readable signal medium or a machine-readable storage medium. The machine-readable medium may include, but is not limited to, an electronic, magnetic, optical, electromagnetic, infrared or semiconductor system, device or equipment, or any appropriate combination thereof. Concrete examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage equipment, a magnetic storage equipment, or any appropriate combination thereof.

In order that interaction with a user is provided, the systems and techniques described herein may be implemented on a computer. The computer has a display device (for example, a cathode-ray tube (CRT) or liquid-crystal display (LCD) monitor) for displaying information to the user; and a keyboard and a pointing device (for example, a mouse or a trackball) through which the user can provide input to the computer. Other types of devices may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein) or a computing system including any combination of such back-end, middleware or front-end components. The components of the system may be interconnected by any form or medium of digital data communication (for example, a communication network). Examples of the communication network include a local area network (LAN), a wide area network (WAN), a blockchain network and the Internet.

The computing system may include clients and servers. A client and a server are generally remote from each other and typically interact through a communication network. The relationship between the client and the server arises by virtue of computer programs running on the respective computers and having a client-server relationship to each other. The server may be a cloud server, also referred to as a cloud computing server or a cloud host. As a host product in a cloud computing service system, the server solves the defects of difficult management and weak service scalability in a related physical host and a related VPS service.

According to the embodiment of the present disclosure, the present disclosure further provides a roadside equipment and a cloud control platform. The roadside equipment and the cloud control platform may include the electronic equipment of the embodiment of the present disclosure. The roadside equipment may further include, besides the electronic equipment, communication components and the like. The electronic equipment and the communication components may be integrated with or disposed separately from each other. The electronic equipment may acquire data, such as pictures and videos, of a sensing equipment (such as a roadside camera) so as to perform video processing and data calculation.

The cloud control platform executes processing at a cloud terminal, and the electronic equipment included in the cloud control platform can acquire data, such as pictures and videos, of a sensing equipment (such as a roadside camera) so as to perform video processing and data calculation. The cloud control platform may also be referred to as a vehicle-road cooperative management platform, an edge computing platform, a cloud computing platform, a center system, a cloud server, etc.

It is to be understood that various forms of the preceding flows may be used, with steps reordered, added or removed. For example, the steps described in the present disclosure may be executed in parallel, in sequence or in a different order as long as the desired result of the technical solution disclosed in the present disclosure is achieved. The execution sequence of these steps is not limited herein.

The scope of the present disclosure is not limited to the preceding embodiments. It is to be understood by those skilled in the art that various modifications, combinations, subcombinations and substitutions may be made depending on design requirements and other factors. Any modifications, equivalent substitutions, improvements and the like made within the spirit and principle of the present disclosure are within the scope of the present disclosure.

## Claims

1. A vehicle association method, **characterized by** comprising:
collecting (S101), by each observation point, an image of a current vehicle running on a road according to a preset period;
determining (S102), according to the image collected by the each observation point within a preset time period, an original observation sequence of the each observation point relative to the current vehicle;
determining (S103), according to the original observation sequence of the each observation point relative to the current vehicle, a target observation sequence of the each observation point relative to the current vehicle; and
detecting (SI04), according to the target observation sequence of the each observation point relative to the current vehicle, whether current vehicles observed by every two observation points are a same vehicle.

2. The method according to claim 1, wherein the determining, according to the image collected by the each observation point within the preset time period, the original observation sequence of the each observation point relative to the current vehicle comprises:
determining, according to the image collected by the each observation point within the preset time period, a position where the current vehicle is located when each image is collected by the each observation point;
determining (S203), according to the position where the current vehicle is located when the each image is collected by the each observation point and a time point at which the each image is collected by the each observation point, observation data of the each observation point at each time point, wherein the observation data comprises: the time point and the position; and
obtaining, according to the observation data of the each observation point at the each time point, the original observation sequence of the each observation point relative to the current vehicle.

3. The method according to claim 1, wherein the determining, according to the original observation sequence of the each observation point relative to the current vehicle, the target observation sequence of the each observation point relative to the current vehicle comprises:
detecting, according to each piece of observation data in the original observation sequence of the each observation point relative to the current vehicle, whether the original observation sequence of the each observation point relative to the current vehicle satisfies an interception condition; and
in response to the original observation sequence of the each observation point relative to the current vehicle satisfying the interception condition, intercepting, according to a time point in each piece of observation data in each of the original observation sequence, the original observation sequence of the each observation point relative to the current vehicle, and obtaining the target observation sequence of the each observation point relative to the current vehicle.

4. The method according to claim 1, wherein the detecting, according to the target observation sequence of the each observation point relative to the current vehicle, whether the current vehicles observed by the every two observation points are the same vehicle comprises:
calculating (S304), according to the target observation sequence of the each observation point relative to the current vehicle, an average length of running tracks of current vehicles observed by the every two observation points and an area between the running tracks of the current vehicles observed by the every two observation points;
calculating (S305), according to the area between the running tracks of the current vehicles observed by the every two observation points and the average length of the running tracks of the current vehicles observed by the every two observation points, a similarity between the current vehicles observed by the every two observation points; and
detecting (S306), according to the similarity between the current vehicles observed by the every two observation points, whether the current vehicles observed by the every two observation points are the same vehicle.

5. The method according to claim 4, wherein the calculating, according to the target observation sequence of the each observation point relative to the current vehicle, the average length of the running tracks of the current vehicles observed by the every two observation points comprises:
extracting a position in each piece of observation data from the target observation sequence of the each observation point relative to the current vehicle;
calculating, according to the position in the each piece of observation data extracted from the target observation sequence of the each observation point relative to the current vehicle, a length of a running track of the current vehicle observed by the each observation point; and
calculating, according to the length of the running track of the current vehicle observed by the each observation point, the average length of the running tracks of the current vehicles observed by the every two observation points.

6. A vehicle association device, **characterized by** comprising a collection module (501), a determination module (502) and a detection module (503), wherein
the collection module (501) is configured to collect, by each observation point, an image of a current vehicle running on a road according to a preset period;
the determination module (502) is configured to determine, according to the image collected by the each observation point within a preset time period, an original observation sequence of the each observation point relative to the current vehicle; and determine, according to the original observation sequence of the each observation point relative to the current vehicle, a target observation sequence of the each observation point relative to the current vehicle; and
the detection module (503) is configured to detect, according to the target observation sequence of the each observation point relative to the current vehicle, whether current vehicles observed by every two observation points are a same vehicle.

7. The device according to claim 6, wherein the determination module (503) is configured to determine, according to the image collected by the each observation point within the preset time period, a position where the current vehicle is located when each image is collected by the each observation point; determine, according to the position where the current vehicle is located when the each image is collected by the each observation point and a time point at which the each image is collected by the each observation point, observation data of the each observation point at each time point, wherein the observation data comprises: the time point and the position; and
obtain, according to the observation data of the each observation point at the each time point, the original observation sequence of the each observation point relative to the current vehicle.

8. The device according to claim 6, wherein the determination module (503) is configured to detect, according to each piece of observation data in the original observation sequence of the each observation point relative to the current vehicle, whether the original observation sequence of the each observation point relative to the current vehicle satisfies an interception condition; and in response to the original observation sequence of the each observation point relative to the current vehicle satisfying the interception condition, intercept, according to a time point in each piece of observation data in each of the original observation sequence, the original observation sequence of the each observation point relative to the current vehicle, and obtain the target observation sequence of the each observation point relative to the current vehicle.

9. The device according to claim 6, wherein the detection module (503) comprises: a computation submodule (5031) and a detection submodule (5032); wherein
the computation submodule (5031) is configured to calculate, according to the target observation sequence of the each observation point relative to the current vehicle, an average length of running tracks of current vehicles observed by the every two observation points and an area between the running tracks of the current vehicles observed by the every two observation points; and calculate, according to the area between the running tracks of the current vehicles observed by the every two observation points and the average length of the running tracks of the current vehicles observed by the every two observation points, a similarity between the current vehicles observed by the every two observation points; and
the detection submodule (5032) is configured to detect, according to the similarity between the current vehicles observed by the every two observation points, whether the current vehicles observed by the every two observation points are the same vehicle.

10. The device according to claim 9, wherein the computation submodule (5031) is configured to extract a position in each piece of observation data from the target observation sequence of the each observation point relative to the current vehicle; calculate, according to the position in the each piece of observation data extracted from the target observation sequence of the each observation point relative to the current vehicle, a length of a running track of the current vehicle observed by the each observation point; and calculate, according to the length of the running track of the current vehicle observed by the each observation point, the average length of the running tracks of the current vehicles observed by the every two observation points.

11. An electronic equipment, comprising:
at least one processor; and
a memory communicatively connected to the at least one processor, wherein
the memory stores instructions executable by the at least one processor, and the instructions are executed by the at least one processor to cause the at least one processor to execute the method of any one of claims 1 to 5.

12. Anon-transitory computer-readable storage medium storing computer instructions for causing a computer to execute the method of any one of claims 1 to 5.

13. A computer program product, comprising a computer program which, when executed by a processor, implements the method of any one of claims 1 to 5.

14. A roadside equipment, comprising the electronic equipment of claim 11.

15. A cloud control platform, comprising the electronic equipment of claim 11.
